# EUROPÄISCHE PATENTSCHRIFT

(11) **EP 0 838 301 B1**
(45) Veröffentlichungstag und Bekanntmachung des Hinweises auf die Patenterteilung: **23.01.2002**
(21) Anmeldenummer: 97116051.0
(22) Anmeldetag: 16.09.1997
(51) Int. Cl.: B23K 26/04

(54) **Verfahren zum Schweissen von Profilen auf grossformatigen Aluminium-Strukturbauteilen mittels Laserstrahlen und Vorrichtung zur Durchführung des Verfahrens**
Process for welding profiles on large format aluminium structural elements using laser beam and apparatus therefor
Procédé de soudage de profilages sur des structures d'aluminium de grand format au moyen de faisceau laser et appareil pour exécuter le procédé

(30) Priorität: 27.09.1996 DE 19639667
(43) Veröffentlichungstag der Anmeldung: 29.04.1998
(73) Patentinhaber: EADS Airbus GmbH, 21129 Hamburg (DE)
(72) Erfinder: Gedrat, Olaf, Dr.-Ing., 26954 Nordenham (DE); Kuck, Günter, Dipl-Ing., 26954 Nordenham (DE); Kolley, Arnold, Dipl.-Ing., 27777 Ganderkesee (DE); Neye, Gerhard, Dipl.-Ing., 28816 Stuhr II (DE)
(74) Vertreter: Hansmann, Dierk, Dipl.-Ing.

(56) Entgegenhaltungen:
- WO-A-93/23196
- US-A- 4 223 202
- US-A- 4 327 275

## Beschreibung

Die Erfindung betrifft ein Verfahren zum Schweißen von Profilen auf großformatigen Aluminium-Strukturbauteilen mittels Laserstrahlen, insbesondere von Stringern auf zylindrisch oder sphärisch gekrümmten Hautblechen im Luftfahrzeugbau unter Verwendung eines das Strukturbauteil aufnehmenden variierbaren Trägers, eines Rollenführungs- und Spannsystems, mit welchem das zu verschweißende Profil nach seiner Vorpositionierung auf dem Strukturbauteil fixiert und durch eine CNC-Anlage geführt wird, und eines Laserstrahl-Führungssystems, durch welches zwei Laserstrahlen von zwei Seiten gleichzeitig an die Schweißstelle geführt werden, sowie eine Vorrichtung zur Durchführung des Verfahrens.

Ein derartiges Schweißverfahren ist in den VDI-Fortschrittsberichten, Reihe 2: Fertigungstechnik Nr. 326 Dissertation 07.94 von Dipl.-Ing. Peter Heider "Lasergerechte Konstruktion und lasergerechte Fertigungsmittel zum Schweißen großformatiger Aluminium-Strukturbauteile" beschrieben. Um beispielsweise derartige AL-Strukturbauteile in der Haut-Stringer-Bauweise fehlerfrei, d.h. rißfrei, und ohne größere Bauteildeformationen herzustellen, werden die T-Stöße der Stringer und Hautbleche mittels zweier Laser beidseitig und gleichzeitig geschweißt. Zum Erreichen eines gemeinsamen Schmelzbades werden beide Laserstrahlen sich gegenüberliegend an identischer Position auf den Fügestoß fokussiert. Es wird somit ein gleichmäßiger Wärmeverlauf erhalten, wodurch eine Minimierung von Schweißeigenspannungen in den Schweißnähten erzielt wird.

Als lasergerechte Fertigungsmittel werden hier alle Komponenten angesehen, die an den speziellen Anwendungsfall des Laserstrahlschweißens der Aluminium-Legierung AlMgSiCu im T-Stoß angepaßt sind. Dazu gehören Bewegungseinheit, Bearbeitungskopf mit Strahlführung und Gaszuführung, Spannvorrichtung und Zusatzwerkstoffeinbringung, wobei durch die Verwendung von artfremden Zusatzwerkstoffen, wie z. B. AlSi12, das Problem der Rißbildung reduziert wird.

Die bekannte Schweißvorrichtung zur beidseitigen gleichzeitigen Verschweißung von Stringern mit einem Hautblech weist u.a. einen variierbaren Träger zur Aufnahme des Hautbleches und ein flexibles Rollenführungs- und Spannsystem zur exakten Positionierung und Fixierung der Stringer auf dem Hautblech während eines Schweißvorganges auf. Hierbei wird die seitliche Führung eines Stringers von einem dem Laserstrahl vorlaufenden und einem nachlaufenden Rollenpaar übernommen. Jedes der beiden Rollenpaare besteht aus einer Führungsrolle zur Bestimmung der Lage des Stringers und einer Spannrolle. Die Positionierung des Stringers wird vom Bearbeitungskopf vorgenommen, der wiederum über ein CNC-Programm verfahren wird, welches sich über Fixpunkte an der realen Lage des Hautbleches orientiert. Der Andruck eines Stringers auf das Hautblech wird durch zwei über der Schweißstelle angeordnete Rollen gewährleistet. Hierbei ist die Vorspannung der Andruckrollen sowie der seitlichen Spannrollen über Federn einstellbar, während die Relativbewegung zwischen Bearbeitungskopf und den Werkstücken sowohl vom den Werkstücken als auch vom Bearbeitungskopf vorgenommen werden kann. Von Nachteil ist allerdings, daß die Spann- und Fixiereinrichtungen der vorbekannten Schweißvorrichtung bauteilspezifisch ausgebildet sind.

Aufgabe der vorliegenden Erfindung ist es daher, ein Verfahren der eingangs genannten Art vorzuschlagen, mit welchem eine hohe Flexibilität der Geometrien der zu verschweißenden Profile und AL-Strukturbauteile ermöglicht wird.

Diese Aufgabe wird erfindungsgemäß dadurch gelöst, daß die beiden Laserstrahlen des Laserstrahl-Führungssystems von dem Rollenführungs- und Spannsystem entkoppelt und mit Hilfe eines Nahtsuchsystems automatisiert an die tatsächliche Schweißnahtposition der zu verschweißenden Bauelemente geführt werden. Ein Vorteil der Erfindung besteht darin, daß vorhandene Abweichungen von einer Sollage der Fügenaht infolge von beispielsweise Bauteiltoleranzen, thermisch bedingtem Verzug infolge des Schweißprozesses oder mechanisch bedingtem Verzug infolge einer Bauteileinspannung durch die vorzugsweise optische Erfassung der Ist-Lage und die anschließende automatische Nachführung der Laserstrahlen während des Schweißvorganges korrigiert werden. Ein weiterer erfindungsgemäßer Vorteil besteht in der Minimierung der prozeßbedingt induzierten Spannungen, da die Bauteilkomponenten nahezu spannungsfrei zueinander positioniert werden.

Erfindungsgemäße Weiterbildungen sind in den Unteransprüchen 2 und 3 beschrieben.

Eine Vorrichtung zur Durchführung des erfindungsgemäßen Verfahrens ist dadurch gekennzeichnet, daß das Laserstrahl-Führungssystem durch eine Sensorsteuerschaltung eines Nahtsuchsystems verknüpft mit der NC-Steuerung der CNC-Anlage und das entkoppelte Rollenführungs- und Spannsystem durch die NC-Steuerung der CNC-Anlage gesteuert werden.

In der Zeichnung ist ein Ausführungsbeispiel der Erfindung schematisch dargestellt. Es zeigen:
- Fig. 1: einen Ausschnitt einer Vorrichtung in Vorderansicht, die zum Schweißen von Profilen auf großformatigen Aluminium-Strukturbauteilen nach dem erfindungsgemäßen Verfahren dient, und
- Fig. 2: ein Blockschaltbild einer Schaltungsanordnung zur Steuerung der aus Fig. 1 ersichtlichen Vorrichtung.

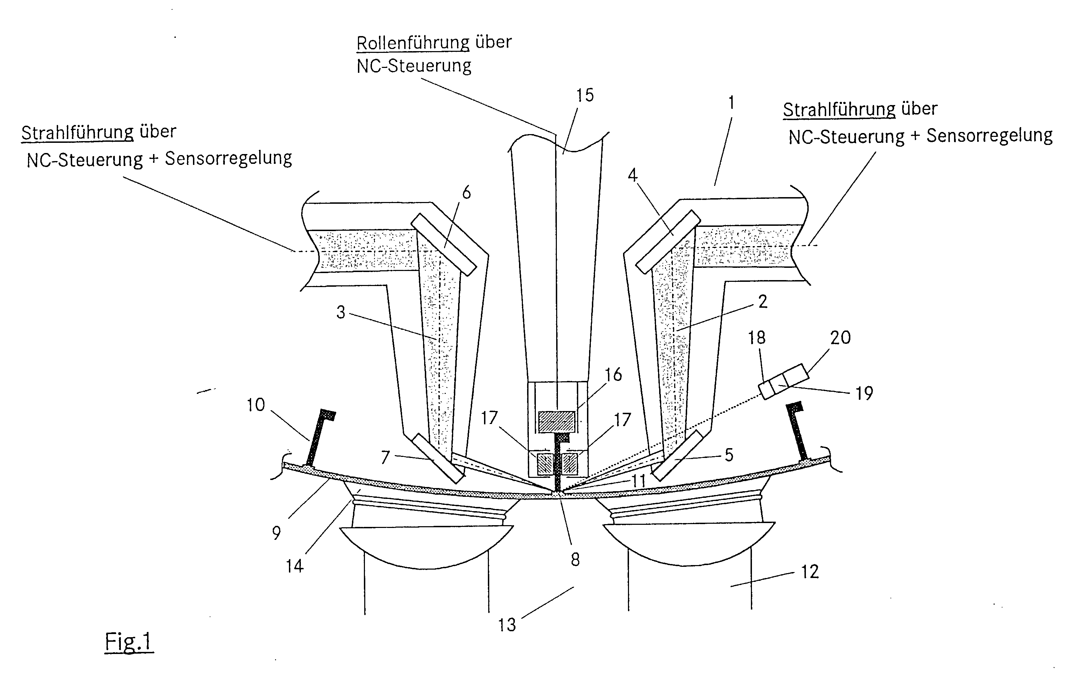

In Fig. 1 ist lediglich ein sich in unmittelbarer Nähe einer Schweißstelle 8 befindliches Laserstrahl-Führungssystem 1 einer Laserschweißvorrichtung dargestellt. Dieses System weist zwei Laserstrahlen 2 und 3 auf, die mittels jeweils zweier Umlenkspiegel 4 und 5 bzw. 6 und 7 gleichzeitig von zwei Seiten an die Schweißstelle 8 geführt werden. Die Schweißstelle 8 wird durch ein großformatiges Aluminium-Strukturbauteil 9 und ein normalerweise senkrecht auf dem Bauteil 9 angeordnetes Profil 10 gebildet. In dem vorliegenden Beispiel handelt es sich um ein gekrümmtes Hautblech einer Flugzeug-Rumpfstruktur aus zum Beispiel AlMgSiCu und um ein Stringerprofil, von dem typischerweise bis zu 20 Stück auf der Innenseite eines Hautbleches angeschweißt sind. Hierbei befindet sich vor einem Schweißvorgang zwischen dem Hautblech 9 und den Stringerprofilen 10 jeweils ein Depot eines artfremden Zusatzstoffes 11, beispielsweise AlSi12, der bei einem Schweißvorgang in die Schweißnaht eindringt und die Bildung von Rissen verhindert. Der Depot-Zusatzstoff wird in Form einer auf das Hautblech 9 aufgetragenen Auflage vor einem Schweißvorgang aufgebracht, wodurch die Zuführung von Zusatzstoffen mittels einer Drahtvorrichtung entfällt. Dasselbe Wirkprinzip ist auch bei Verwendung von Zusatzdraht anwendbar.

Das gekrümmte Hautblech 9 ist auf Stützelementen 12 eines Trägers 13 angeordnet. Die Stützelemente 12 weisen derart einstellbare Aufnahmeelemente 14 auf, daß der somit variierbare Träger 13 Bleche unterschiedlichster Geometrie reproduzierbar positionieren kann. Zur Positionierung und Fixierung der Stringerprofile 10 auf dem Hautblech 9 während eines Schweißvorganges ist ein von der Laserschweißvorrichtung entkoppeltes Rollenführungs- und Spannsystem 15 vorgesehen. Dieses System weist jeweils zwei Rollenpaare 16 und 17 auf, von denen das Rollenpaar 16 zur Erzeugung des Andruckes zwischen dem Stringerprofil 10 und dem Hautblech 9 und das Rollenpaar 17 zur Führung des Systems über das Stringerprofil 10 dienen. Hierbei wird das Rollenpaar 17 einseitig durch das NC-Programm der CNC-Anlage geführt. Die für einen Schweißprozeß erforderliche Relativbewegung zwischen dem Hautblech 9 und dem Stringerprofil 10 sowie dem Rollenführungs- und Spannsystem 15 erfolgt durch die NC-Steuerung der CNC-Anlage, während die Relativbewegung zwischen dem Hautblech 9 und dem Stringerprofil 10 sowie dem Laserstrahl-Führungssystem 1 durch eine Sensorsteuerschaltung 19 eines Nahtsuchsystems 20 und durch die NC-Steuerung der CNC-Anlage gesteuert wird.

Für die Relativbewegung zwischen dem Hautblech und dem Stringerprofil sowie dem Laserstrahl-Führungssystem ist aus Fig. 1 ein Sensor 18 ersichtlich, mit dessen Hilfe während eines Schweißvorganges die Ist-Lage-Daten der Bauteilkomponenten zur NC-Sollage der zu verschweißenden Stringerprofile 10 und des Hautbleches 1 ermittelt werden. Der vorzugsweise optische Sensor 18 ist ebenso wie eine ihm nachgeordnete SensorSteuerung 19 Bestandteil eines Nahtsuchsystems 20, welches in einem definierten Abstand zur Schweißstelle 8 im Nahtvorlauf positioniert ist. Dieser Abstand ist zur Gewährleistung gleicher Lastbedingungen an der Schweißstelle und am Sensormeßpunkt mit der Position des oberen Führungsrollenpaares 16 abgeglichen.

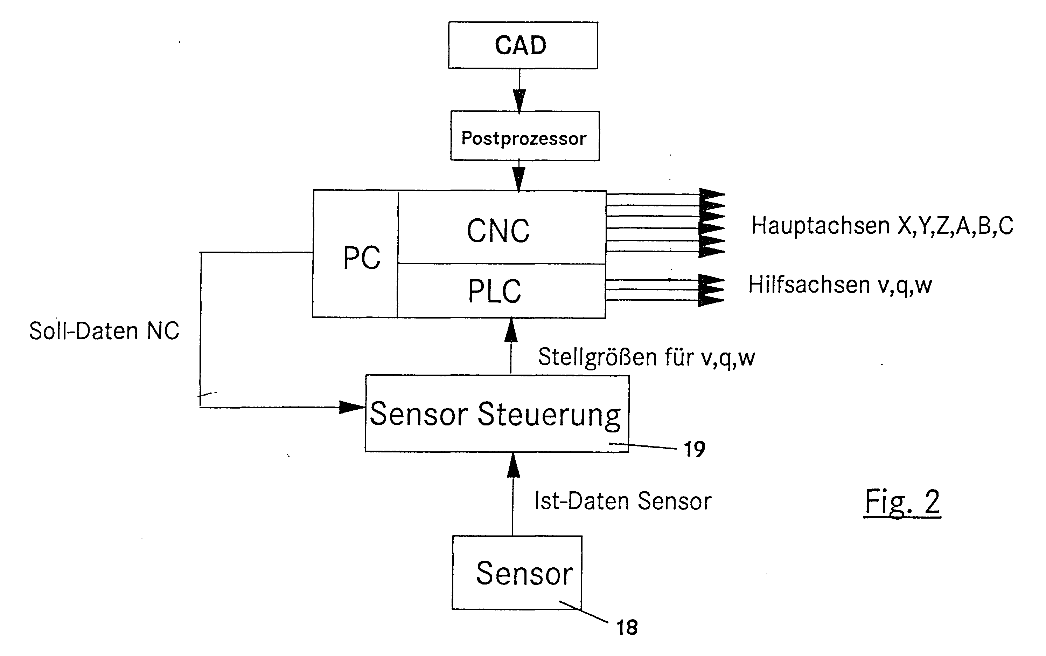

Das Sensorsystem 20 erfaßt einseitig die komplette Kontur am Übergang vom Hautblech 9 zum Stringerprofil 10, so daß horizontale und vertikale Lageinformationen vorliegen. Da die Schweißstelle 8 und der Sensormeßpunkt nicht übereinstimmen, setzen sich diese Lagedaten aus geometrisch gewollten und toleranz-, prozeßbedingten Anteilen zusammen, so daß für eine Ermittlung der Stellgrößen der Hilfsachsen (v, q, w-Achsen) der erstgenannte Anteil zu eleminieren ist. Dies erfolgt durch eine Rechenoperation in der Sensor-Steuerung 19 nach der Bereitstellung der Solldaten. Wie aus Fig. 2 zu ersehen ist, werden diese Solldaten über den Prozessor (Poetprozessor) von der CNC-Steuerung der Anlage ermittelt und bereitgestellt.

### Bezugszeichenliste

- 1: Laserstrahl-Führungssystem
- 2 bis 3: Laserstrahlen
- 4 bis 7: Umlenkspiegel
- 8: Schweißstelle
- 9: Strukturbauteil / Hautblech
- 10: Profil / Stringer
- 11: Zusatzwerkstoff
- 12: Stützelement
- 13: Träger
- 14: Aufnahmeflächen der Stützelemente 12
- 15: Rollenführungs- und Spannsystem
- 16 bis 17: Rollenpaare
- 18: Sensor
- 19: Sensorsteuerschaltung
- 20: Nahtsuchsystem

## Patentansprüche

1. Verfahren zum Schweißen von Profilen auf großformatigen Aluminium-Strukturbauteilen mittels Laserstrahlen, insbesondere von Stringern auf zylindrisch oder sphärisch gekrümmten Hautblechen im Luftfahrzeugbau unter Verwendung eines das Strukturbauteil aufnehmenden variierbaren Trägers, eines Rollenführungs- und Spannsystems, mit welchem das zu verschweißende Profil nach seiner Vorpositionierung auf dem Strukturbauteil fixiert und durch eine CNC-Anlage geführt wird, und eines Laserstrahl-Führungssystems, durch welches zwei Laserstrahlen von zwei Seiten gleichzeitig an die Schweißstelle geführt werden, **dadurch gekennzeichnet, daß** die beiden Laserstrahlen (2,3) des Laserstrahl-Führungssystems (1) von dem Rollenführungs- und Spannsystem (15) entkoppelt und mit Hilfe eines Nahtsuchsystems (20) automatisiert an die tatsächliche Schweißnahtposition (8) der zu verschweißenden Bauelemente (9,10) geführt werden.

2. Verfahren nach Anspruch 1, **dadurch gekennzeichnet, daß** während des Schweißprozesses Zusatzwerkstoffe (11) zur Vermeidung von Rissen in den Schweißnähten von dem Rollenführungs- und Spannsystem (15) entkoppelt zugeführt werden.

3. Verfahren nach Anspruch 2, **dadurch gekennzeichnet, daß** die Zusatzstoffe (11) in Form einer auf dem Strukturbauteil (9) angeordneten Auflage zugeführt werden.

4. Vorrichtung zum Schweißen von Profilen auf großformatigen Aluminium-Strukturbauteilen mittels Laserstrahlen, insbesondere von Stringern auf zylindrisch oder sphärisch gekrümmten Hautblechen im Luftfahrzeugbau mit einem das Strukturbauteil aufnehmenden variierbaren Träger, einem Rollenführungs- und Spannsystems, mit welchem das zu verschweißende Profil nach seiner Vorpositionierung auf dem Strukturbauteil fixierbar und durch eine CNC-Anlage führbar ist, und einem Laserstrahl-Führungssystems, durch welches zwei Laserstrahlen von zwei Seiten gleichzeitig an die Schweißstelle führbar sind , **dadurch gekennzeichnet, daß** das Laserstrahl-Führungssystem (1) durch eine Sensorsteuerschaltung (19) eines Nahtsuchsystems (20) und durch die NC-Steuerung der CNC-Anlage und das entkoppelte Rollenführungs- und Spannsystem (15) durch die NC-Steuerung der CNC-Anlage gesteuert werden.

## Claims

1. Method of welding sections on large-sized aluminium structural components by means of laser beams, in particular stringers on cylindrically or spherically curved skinplates in aircraft construction using a variable support for receiving the structural component, a guiding and clamping roller system, by means of which the section to be welded is fixed after its prepositioning on the structural component and guided by a CNC system, and a laser beam guidance system, by means of which two laser beams are guided from two directions simultaneously onto the welding point, **characterized in that** the two laser beams (2, 3) of the laser beam guidance system (1) are decoupled from the guiding and clamping roller system (15) and are guided with the aid of a seam locating system (20) automatically to the actual weld seam position (8) of the components (9, 10) to be welded together.

2. Method according to claim 1, **characterized in that** during the welding process filling materials (11) for preventing cracks in the weld seams are supplied in a decoupled manner from the guiding and clamping roller system (15).

3. Method according to claim 2, **characterized in that** the filling materials (11) are supplied in the form of a coating disposed on the structural component (9).

4. Apparatus for welding sections on large-sized aluminium structural components by means of laser beams, in particular stringers on cylindrically or spherically curved skinplates in aircraft construction, comprising a variable support for receiving the structural component, a guiding and clamping roller system, by means of which the section to be welded is fixable after its prepositioning on the structural component and guidable by a CNC system, and a laser beam guidance system, by means of which two laser beams are guidable from two directions simultaneously onto the welding point, **characterized in that** the laser beam guidance system (1) is controlled by a sensor control circuit (19) of a seam locating system (20) and by the numerical control of the CNC system, and the decoupled guiding and clamping roller system (15) is controlled by the numerical control of the CNC system.

## Revendications

1. Procédé de soudage de profilés sur des éléments structuraux grand format en aluminium, par rayons laser, et plus particulièrement procédé de soudage, dans l'aviation, de raidisseurs sur tôles cylindriques ou sphériques plastifiées, au moyen d'un support variable recevant l'élément structural, d'un système de guidage à rouleaux et de serrage grâce auquel le profilé à souder est, après disposition préalable, fixé sur l'élément structural puis guidé à travers une installation CNC, d'un système de guidage de rayons lasers permettant de guider deux rayons lasers de deux côtés simultanément vers le point de soudage, et
**caractérisé en ce que**
les deux rayons lasers (2, 3) du système de guidage de rayons lasers (1) sont détachés du système de guidage à rouleaux et de serrage (15) et guidés de façon automatisée jusque dans la position de soudage effective (8) des éléments structuraux à souder (9, 10), au moyen d'un système de recherche du point de soudure (20).

2. Procédé selon la revendication 1, **caractérisé en ce que** des matériaux additionnels (11) destinés à éviter toute fissure dans les soudures et détachés du système de guidage à rouleaux et de serrage (15) sont ajoutés pendant le processus de soudage.

3. Procédé selon la revendication 2, **caractérisé en ce que** les matériaux supplémentaires (11) sont ajoutés sous la forme d'une placage sur l'élément structural (9).

4. Dispositif de soudage de profilés sur des éléments structuraux grand format en aluminium, par rayons laser, et plus particulièrement dispositif de soudage, dans l'aviation, de raidisseurs sur tôles plastifiées cylindriques ou sphériques, avec un support variable recevant l'élément structural, un système de guidage à rouleaux et de serrage grâce auquel le profilé à souder est, après disposition préalable, fixable sur l'élément structural puis guidable à travers une installation CNC et un système de guidage de rayons lasers permettant de guider deux rayons lasers de deux côtés simultanément vers le point de soudage, et **caractérisé en ce que** le système de guidage des rayons lasers (1), d'une part, et le système de guidage à rouleaux et de serrage (15), d'autre part, sont contrôlés respectivement par, d'une part, une commutation de contrôle par senseurs (19) d'un système de recherche du point de soudure (20) et le contrôle NC de l'installation CNC et, d'autre part, le contrôle NC de l'installation CNC.
